Europäisches Patentamt

European Patent Office

Office européen des brevets

(19)

(11) Numéro de publication : **0 036 580**
**B1**

(12) **FASCICULE DE BREVET EUROPÉEN**

(45) Date de publication du fascicule du brevet :
**15.08.84**

(51) Int. Cl.³ : **H 02 B 13/02**

(21) Numéro de dépôt : **81101849.8**

(22) Date de dépôt : **13.03.81**

(54) **Dispositif de liaison par sectionneur entre deux jeux de barres orthogonaux sous enveloppes métalliques.**

(30) Priorité : **20.03.80 FR 8006232**

(43) Date de publication de la demande :
**30.09.81 Bulletin 81/39**

(45) Mention de la délivrance du brevet :
**15.08.84 Bulletin 84/33**

(84) Etats contractants désignés :
**BE DE FR IT NL**

(56) Documents cités :
**FR-A- 2 346 884**
**FR-A- 2 379 900**

(73) Titulaire : **ALSTHOM-ATLANTIQUE Société anonyme dite:**
**38, Avenue Kléber**
**F-75784 Paris Cedex 16 (FR)**

(72) Inventeur : **Cretin, Jean-Loup**
**87, rue du 1er Mars**
**F-69100 Villeurbanne (FR)**

(74) Mandataire : **Weinmiller, Jürgen et al**
**Zeppelinstrasse 63**
**D-8000 München 80 (DE)**

## Description

L'invention est relative à un dispositif de liaison par sectionneur entre deux jeux de barres orthogonaux sous enveloppes métalllliques remplies d'un gaz diélectrique, tel que l'hexafluorure de soufre.

Dans les postes sous enveloppe métallique remplie de gaz sous pression, à plusieurs jeux de barres omnibus, on utilise des sectionneurs permettant l'aiguillage d'un jeu de barres vers un autre disposé obliquement par rapport au premier. Ces sectionneurs sont généralement disposés sur des piquages de dérivation entre une enveloppe blindée partant d'un disjoncteur et celle d'un jeu de barres.

L'ensemble formé par les piquages de dérivation et le sectionneur conduit à un encombrement particulièrement important.

Pour réduire cet encombrement général, on peut utiliser des dérivations entre des jeux de barres triphasés dans une même gaine métallique, mais cela n'est guère efficace du fait que les jeux de barres sont disposés perpendiculairement l'un au-dessus de l'autre. Voir les documents FR-A-2 346 884 et FR-A-2 379 900.

L'invention a pour but un dispositif de liaison conduisant à un encombrement réduit.

L'invention a pour objet un dispositif de liaison par sectionneur entre deux jeux de barres triphasées sous enveloppes métalliques orthogonaux l'un par rapport à l'autre, les axes des enveloppes étant concourants, caractérisé en ce que le croisement des jeux de barres est réalisé à l'intérieur d'une sphère comportant des viroles de raccordement avec les enveloppes des jeux de barres, les axes des viroles étant disposés dans le plan des axes, et en ce que l'un des jeux de barres épouse dans la traversée de la sphère une formation en nappe écartée parallèlement d'un côté dudit plan tandis que l'autre jeu de barres épouse une formation en nappe écartée parallèlement de l'autre côté dudit plan, les barres de même phase étant susceptibles d'être reliées entre elles par un sectionneur dont les tiges de contact sont disposées perpendiculairement aux nappes des jeux de barres au droit de la projection des barres de même phase sur ledit plan et en un alignement incliné par rapport à leur direction.

Les jeux de barres étant orthogonaux, les viroles adjacentes sont disposées à 90° l'une de l'autre. L'alignement des tiges de sectionneur est incliné à 45° par rapport à la direction des jeux de barres. Le mécanisme de commande du sectionneur est disposé dans un caisson fixé sur une virole de la sphère disposée perpendiculairement au plan formé par les axes des autres viroles.

La figure 1 est une vue en élévation partiellement en coupe d'un dispositif de liaison selon l'invention.

La figure 2 est une vue en coupe selon la ligne II-II de la figure 1.

Dans les figures, on a désigné par 1 l'ensemble d'un jeu de barres triphasées disposé à l'intérieur d'enveloppes métalliques 31 et 32 coaxiales et par 2 l'ensemble d'un jeu de barres triphasées disposé orthogonalement à l'intérieur d'enveloppes métalliques coaxiales 33 et 34. Les axes des enveloppes 31 à 34 sont concourants.

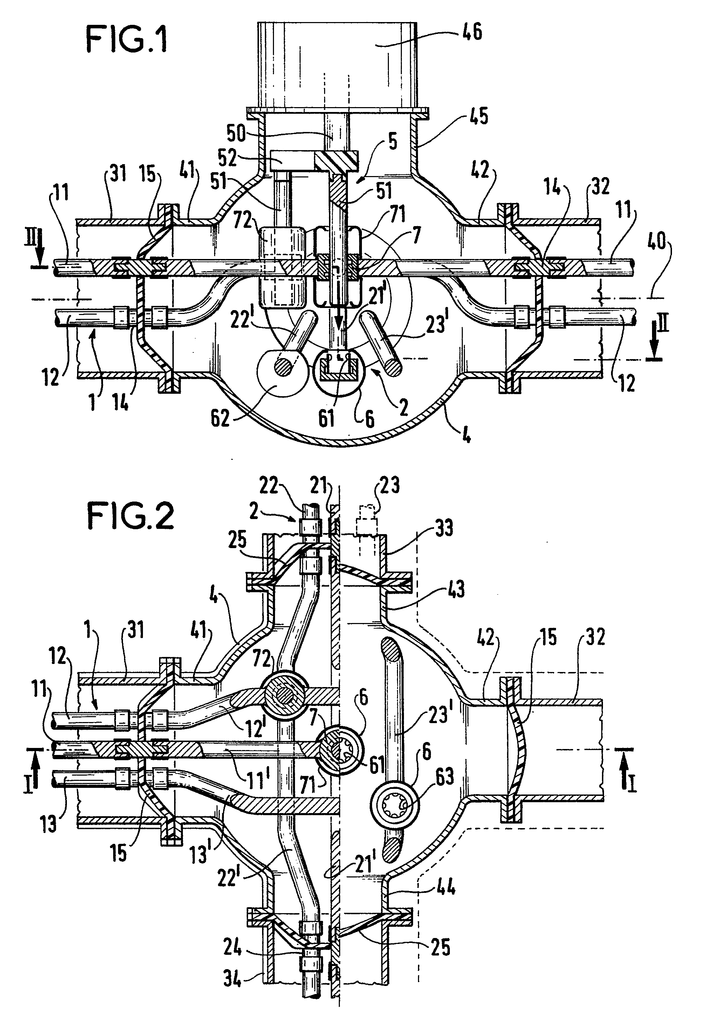

Les enveloppes métalliques 31, 32, 33 et 34 sont raccordées à une sphère de raccordement 4 par quatre viroles 41, 42, 43, 44 dont les axes sont disposés ainsi que ceux des enveloppes 31, 32, 33 et 34, dans un plan 40 repéré par sa trace dans la figure 1. L'ensemble est rempli d'un gaz diélectrique isolant tel que l'hexafluorure de soufre.

Le jeu de barres 1 est constitué par une barre supérieure 11 et deux barres inférieures 12 et 13. Elles sont disposées au sommet d'un triangle équilatéral dont la base, correspondant aux barres inférieures 12 et 13, est parallèle au plan 40 et dont le centre coïncide avec l'axe de leur enveloppe. De même le jeu de barres 2 est constitué par une barre supérieure 21 et deux barres inférieures 22 et 23. Elles sont disposées au sommet d'un triangle équilatéral dont la base, correspondant aux barres inférieures 22 et 23, est parallèle au plan 40. Les barres d'un même jeu sont maintenues isolées et écartées entre elles par des inserts conducteurs tels que 14 et 24 disposés au travers d'isolateurs 15 et 25 interposées entre des brides de raccordement entre les enveloppes et les viroles. Entre les inserts 14, les barres 11, 12, 13 sont raccordées entre elles par des traversées 11', 12', 13' épousant une formation en nappe supérieure disposée parallèlement au plan 40 au niveau des barres supérieures 11. Entre les inserts 24, les barres 21, 22, 23 sont raccordées entre elles par des traversées 21', 22', 23' épousant une formation orthogonale en nappe inférieure disposée parallèlement au plan 40 à une distance égale à celle des barres supérieures 21 par rapport au plan 40.

A sa partie supérieure la sphère 4 comporte perpendiculairement au plan 40 une virole 45 surmontée par un caisson étanche 46 et renfermant un mécanisme de commande de la tige de manœuvre 50 d'un sectionneur 5 tripolaire. Le sectionneur 5 comporte trois tiges de contact telles que 51 supportées par un barreau isolant 52, solidaire de la tige de manœuvre 50. Les trois tiges de contact 51 sont disposées perpendiculairement au plan 40 et au droit de la projection des points d'intersection sur ce plan respectivement des traversées des barres 11' et 21', 12' et 22', 13' et 23'. En ces points, les traversées inférieures 21', 22' et 23' sont munies d'un plot porte-contact 6 réalisé, par exemple, à l'aide de deux demi-coquilles enserrant les traversées. Chaque plot 6 est muni d'une couronne de doigts de contact 61 et est entouré d'un capot pare-effluve tel que 62 et 63. De leur côté, en ces points les traversées supérieures 11', 12', 13' comportent des plots de contact 7 insérés et munis de capot pare-effluve tels que 71 et 72. Les tiges de contact 51 sont disposées coulissantes au travers des plots de contact 7 et leur extrémité peut lors de la manœuvre du sectionneur 5 entrer en contact avec les doigts de contact 61.

Dans la disposition décrite, les trois tiges de contact 51 se trouvent disposées dans un même alignement à 45° par rapport à la direction des jeux de barres.

Une telle disposition permet de gagner beaucoup de place puisque la sphère de raccordement sert à la fois de passage à des barres conductrices perpendiculaires entre elles et au sectionneur.

## Revendication

Dispositif de liaison par sectionneur entre deux jeux de barres triphasées sous enveloppes métalliques orthogonaux l'un par rapport à l'autre, les axes des enveloppes (31, 32, 33, 34) étant concourants, caractérisé en ce que le croisement des jeux de barres (1, 2) est réalisé à l'intérieur d'une sphère (4) comportant des viroles (41, 42, 43, 44) de raccordement avec les enveloppes (31, 32, 33, 34) des jeux de barres, les axes des viroles étant disposés dans le plan des axes et en ce que l'un (1) des jeux de barres (11, 12, 13) épouse dans la traversée de la sphère une formation en nappe écartée parallèlement d'un côté dudit plan tandis que l'autre (2) jeu de barres (21, 22, 23) épouse une formation en nappe écartée parallèlement de l'autre côté dudit plan, les barres de même phase étant susceptibles d'être reliées entre elles par un sectionneur (5), dont les tiges de contact (51) sont disposées perpendiculairement aux nappes des jeux de barres au droit de la projection des barres de même phase sur ledit plan et en un alignement incliné par rapport à leur direction.

## Claim

A junction device by means of a power switch between two orthogonal sets of three-phased bus bars which are cladded by metal jackets, the axes of the jackets (31, 32, 33, 34) being intersecting axes, characterized in that the crossing of the sets (1, 2) of bus bars is made inside a sphere (4) comprising transition fittings (41, 42, 43, 44) for the connection with the bus bar set jackets (31, 32, 33, 34), the axes of the fittings being disposed in the plane of the jacket axes, and that one of the sets (1) of bus bars (11, 12, 13) occupies in the sphere a first plane which is parallelly displaced on one side with respect to the plane of the jacket axes, whereas the other set (2) of bus bars (21, 22, 23) occupies in the sphere a second plane which is parallelly displaced on the opposite side with respect to the plane of the jacket axes, the bus bars of one phase being conceived to be interconnected through a power switch (5), the contact rods (51) of which are disposed perpendicularly to said first and second plane and to the protection lines of said bus bars of identical phase in said plane of the jacket axes and in an inclined alignment with respect to their direction.

## Anspruch

Vorrichtung zur Verbindung zweier dreiphasiger Stromschienensysteme über einen Trennschalter, die unter Metallhüllen angeordnet sind und rechtwinklig zueinander verlaufen, wobei die Achsen der Hüllen (31, 32, 33, 34) konvergieren, dadurch gekennzeichnet, daß die Kreuzung der Sammelschienen (1, 2) im Inneren einer Kugel (4) erfolgt, die Verbindungsstutzen (41, 42, 43, 44) zum Anschluß der Hüllen (31, 32, 33, 34) der Sammelschienen aufweist, wobei die Achsen der Stutzen sich in der Ebene der Hüllenachsen befinden, und daß eines der Systeme (1) von Sammelschienen (11, 12, 13) in der Kugel parallel zu dieser Ebene auf einer Seite dieser Ebene verläuft, während das andere System (2) von Stromschienen (21, 22, 23) parallel zu dieser Ebene auf deren anderer Seite verläuft, wobei die Schienen jeweils einer Phase miteinander über einen Trennschalter (5) verbunden werden können, dessen Kontaktstangen (51) senkrecht zu den Ebenen, in denen die Stromschienensysteme verlaufen, gegenüber der Projektion dieser Schienen gleicher Phase auf diese Ebene und in geneigter Flucht zu deren Richtung angeordnet sind.

FIG.1

FIG.2